# EUROPÄISCHE PATENTSCHRIFT

(11) **EP 2 770 264 B1**
(45) Veröffentlichungstag und Bekanntmachung des Hinweises auf die Patenterteilung: **06.09.2017**
(21) Anmeldenummer: 14156832.9
(22) Anmeldetag: 26.02.2014
(51) Int. Cl.: F24D 11/02

(54) **Fernwärmeübergabevorrichtung für ein Gebäude sowie Fernwärmesystem zur Versorgung von Gebäuden mit Wärmeenergie**
District heat transfer device for a building and district heating system for supplying buildings with thermal energy
Dispositif de restitution de chauffage à distance pour un bâtiment et système de chauffage à distance pour l'approvisionnement de bâtiments en énergie thermique

(30) Priorität: 26.02.2013 DE 102013003206
(43) Veröffentlichungstag der Anmeldung: 27.08.2014
(73) Patentinhaber: Moises, Wolfgang, 85457 Wörth (DE); Maierhofer, Franz, 84533 Haiming (DE); Zieglgänsberger, Rudolf, 84518 Garching (DE)
(72) Erfinder: Moises, Wolfgang, 85457 Wörth (DE); Maierhofer, Franz, 84533 Haiming (DE); Zieglgänsberger, Rudolf, 84518 Garching (DE)
(74) Vertreter: Manitz Finsterwald Patentanwälte PartmbB

(56) Entgegenhaltungen:
- EP-A1- 0 033 530
- EP-A2- 0 916 913
- WO-A1-91/02199
- WO-A2-2010/102626
- WO-A2-2011/105881
- DE-A1- 2 532 850
- DE-A1- 3 147 079
- DE-A1-102008 049 954
- DE-U1-202012 103 891

## Beschreibung

Die Erfindung betrifft eine Fernwärmeübergabevorrichtung für ein Gebäude, insbesondere für ein Wohnhaus. Ebenso betrifft die Erfindung ein Fernwärmesystem, insbesondere zur Versorgung von Gebäuden mit Wärmeenergie.

### Stand der Technik

### Allgemeiner Systemansatz:

Heutige Fernwärmsysteme und Ihre Probleme. Fernwärmesysteme üblichen Zuschnitts haben das große Problem, dass sie zuallermeist an eine Rücklauftemperatur von mindestens 40°C, in den meisten Fällen eher 50-60°C gebunden sind. Um nun eine hohe Transportkapazität in den Rohrleitungen zu erreichen, müsste die Spreizung möglichst hoch sein, ca. 50-60K wären ideal.

Meist werden Fernwärmesysteme daher mit recht hohen Temperaturen von 90-120°C im Vorlauf und 50-65°C im Rücklauf gefahren. Der Aufwand für diese Temperaturen ist in allen Bereichen hoch, die Kosten sind daher ebenfalls oft nicht konkurrenzfähig. Gerade bei großen Entfernungen und kleinen Abnahmemengen kommen heutige Fernwärmesysteme schnell an eine wirtschaftliche Grenze.

Umgekehrt stehen große Mengen an Abwärme im Bereich 20-30°C zur Verfügung. Nach heutigem Stand der Technik lassen sich diese nicht nutzen, da die abnehmenden Verbraucher zu weit entfernt liegen, deren Abnahme oft nicht die hohen Kosten für die aufwändigen Rohrleitungen rechtfertigt und eine Veredelung der Wärme auf nutzbare Größen als nicht effektiv gelten darf, da heutige Fernwärmenetze im Vorlauf oft über 100°C haben.

### Ausnutzung und Gewinnung der Wärme, Veredelung:

Bei der "Veredelung" von Abwärme, die meist mit 15-30°C in großen Mengen vorliegt, kommen immer in irgendeiner Weise Wärmepumpen zum Einsatz. Diese sind in ihrer Jahresarbeitszahl an den Temperaturhub (Unterschied zwischen Wärmequelle also Abwärme-Niveau und Wärmesenke, also Fernwärme-Niveau) gebunden, d.h. bei großem Hub geht die Jahresarbeitszahl eines solchen Aggregates drastisch zurück.

Daher kann eine Vorlauftemperatur aus der Wärmepumpe kaum größer als 65°C sein, um eine effektive, wirtschaftliche Anlage zu erhalten. Das schließen heutige Fernwärmesysteme komplett aus. Diese erfordern oftmals eine Temperatur von über 100°C im Vorlauf und können von Wärmepumpen nicht mehr bedient werden. Auch im aktuellen Ansatz wird der Strombedarf der Wärmepumpen über eine Motor-Generator-Anlage (Blockheizkraftwerk = BHKW) erzeugt. Dies ist bei heutigen Strompreisen günstig, zumal die komplette Abwärme des BHKW's in die Fernwärme einfließt und die Temperatur nach den Wärmepumpen nochmals um ca. 10K erhöht kann.

### Transport der Wärme zum Nutzer:

Bei den Abhängigkeiten des Rücklaufs würde dies bedeuten, dass die Vorläufe oftmals bis zu 120°C betragen müssten. Das bringt vielfältige Nachteile mit sich.

Es bestehen hohe Anforderungen an die Verrohrung und an die Isolierung, was zu hohen Kosten führt. Sonst kommt es zu hohen Wärmeverlusten des Systems.

Geht man den Weg und begrenzt die Vorlauftemperatur auf 90°C, so liegt die Spreizung des Systems, also der Unterschied zwischen Vorlauf und Rücklauf oftmals nur bei 35K. Damit steigen die Wassermengen, die Rohrleitungs-Querschnitte und natürlich auch die Pumpenleistungen und deren Jahresstrombedarf überproportional. Im Ergebnis kann die Verteilung meist nur über kurze Strecken erfolgen.

Ferner bedarf es einer hohen Abnahmemenge, sodass die hohen Erstellungskosten und damit die hohen Kapitalkosten auf eine möglichst hohe Wärmeenge umgelegt werden können.

Dennoch gelten klassische Fernwärmesysteme oftmals als grenz- oder unwirtschaftlich. Eine gute Wirtschaftlichkeit lässt sich nur in eng bebauten Gebieten mit hohem Anteil an großen Gebäuden, vorzugsweise mit älteren Baujahren bei hoher Wärmeabnahme erzielen. Hierbei scheidet die Kombination mit Abwärme- und Restwärmenutzung fast immer aus, da Kraftwerke, Industriebetriebe, Rechenzentren oder dergleichen in solchen Wohnlagen fast nie zu angesiedelt sind.

### Anpassung des Wärmeniveaus an die Nutzeinheit:

Heutige Fernwärmeversorgungen werden sehr oft an bestehende Gebäude angepasst. Hierbei wird eine klassische Fernwärmeübergabestation mit Wärmetauscher als Systemtrennung an die bestehende Warmwasserheizung adaptiert. Der Bestand ist meist auf Rücklauftemperaturen von ca. 50-60 °C ausgelegt. Auch eine Abstimmung der Heizung führt oft nicht dazu, dass diese Rücklauftemperaturen deutlich abgesenkt werden können. Bei Neubauten kann die Heizung besser angepasst werden, insbesondere bei Verwendung von Flächenheizungen.

Beide Gebäudearten haben ein Problem mit der Trinkwarmwasserbereitung. Oftmals werden hier Systeme eingesetzt, die eine Rücklauftemperatur von bis zu 60 °C erzeugen. Gerade auch im Zusammenhang mit hygienischer, legionellen-freier Warmwasserbereitung sind in vielen Fällen Warmwassertemperaturen von 60°C, kurzzeitig 70°C anzuraten oder je nach Gebäudetyp normativ auch eingefordert. Weitere, im Stand der Technik bekannten Lösungen sind aus den Patentschriften WO2010/102626A2, DE3147079A1, DE2532850A1, DE102008049954A1 und EP0033530A1 bekannt. In Bereichen ohne Gasversorgung fehlt eine schlüssige Alternative für die oftmals noch vorhandene Heizölversorgung.

Heutige Fernwärme eignet sich kostenbedingt nicht für diese Bereiche. Wärmepumpensysteme sind für Altbauten meist unwirtschaftlich und haben generell bei Alt- und Neubauten ein Problem mit den geforderten Warmwassertemperaturen, die sie gar nicht oder nur mit enormem Aufwand erzeugen können.

Alle Wärmepumpen haben bezüglich Trinkwarmwassertemperaturen einen wirtschaftlichen Nachteil aufgrund schlechter Leistungsziffern beziehungsweise vermehrt erforderlichem Einsatz von Elektroheizstäben. Teilweise bestehen auch technische Probleme, da die geforderten Temperaturen von der Wärmepumpe erst gar nicht erreicht werden.

Holzsysteme (Scheitholz, Hackgut, Pellets) sind in der Anschaffung teurer und meist sehr wartungsintensiv. Zudem ist Holz als Energieträger in absehbarer Zeit ausgeschöpft.

Flüssiggas ist in der Verteilung und Aufbewahrung aufwändig, was sich in deutlich höheren Preisen gegenüber Erdgas zeigt.

### Aufgabenstellung

Vor diesem Hintergrund bestand die Aufgabe der vorliegenden Erfindung eine Fernwärmeübergabestation anzugeben, die eine erhöhte Energieeffizienz aufweist. Ebenso soll ein Fernwärmesystem mit erhöhter Energieeffizienz beziehungsweise ein mit einer solchen Fernwärmeübergabestation ausgestattetes Fernwärmesystem angegeben werden.

### Erfindungsgemäße Lösung

In Bezug auf die Fernwärmeübergabestation wird diese Aufgabe durch den Gegenstand von Anspruch 1 gelöst. In Bezug auf das Fernwärmesystem wird diese Aufgabe durch den Gegenstand von Anspruch 7 und 8 gelöst. Vorteilhafte Ausgestaltungen der Erfindung sind Gegenstand der Unteransprüche.

### Beschreibung einer erfindungsgemäßen Ausführungsform

### Allgemeiner Systemansatz:

Das vorgestellte System kann aus drei Grundpfeilern bestehen, nämlich eine sogenannte "Veredelungsstation" am oder in der Nähe der Abwärme, wobei ein Gasanschluss notwendig ist. Eine sogenannte "Einrohranordnung" zur Übertragung der Fernwärmeenergie über weite Strecken, sowie eine sogenannte "Hybrid-Heizungs- und Trinkwarmwasserstation" zur gebäudeunabhängigen Umsetzung der Wärme in Haus.

### Ausnutzung und Gewinnung der Wärme, Veredelung:

In Bezug auf die Entnahme der Abwärme ist der erste Ansatzpunkt, dass an oder in der Nähe des Abwärme-Bezugs eine sogenannte "Veredelungsstation" aufgebaut wird, die etwa 70% der Abwärme um 10-15 K abkühlt und diese gewonnene Wärme einem Restfluss von 30 % übermittelt. Dieser Restfluss wird nun auf 68 - 80 °C erwärmt. Hierzu dient eine Einheit von Wärmepumpe, Blockheizkraftwerk und Spitzenlastkessel.

Als Variante und Ergänzung können auch gasmotorbetriebene Wärmepumpen oder Absorptionswärmepumpen eingesetzt werden.

Weiters können auch im Bereich Kompressionswärmepumpen sog. 2-stufige Wärmepumpen, Hochtemperaturwärmepumpen, die Temperaturen bis über 80 °C erzeugen können, Verwendung finden.

Für Spitzenleistungen an wenigen Tagen, sind Spitzenlastkessel gesamtkostenbedingt sinnvoll. Meist würden diese als Gas-Brennwertkessel ausgeführt. Gleichwohl ist auch der Einsatz anderer Brennstoffe möglich. Letztlich können bestehende Anlagen in das Gesamtsystem integriert werden und so besonders als Spitzenlast- oder Ersatzwärmeerzeuger eingebunden werden.

Die Übernahme von höher temperierter Wärme, die auch direkt ohne Veredelung genutzt werden kann, also im direkten Bereich von 80 - 90 °C liegt, Geothermie, Abwärme aus Raffinerien oder dergleichen ist ebenfalls möglich. Auch hier wird der große Vorteil des günstigen Transports der Wärme und der starken Auskühlung und Ausnutzung beim Wärmeverbraucher nachhaltig sein.

Die Gesamteinheit besteht aus je einem dieser Aggregate, besser je zwei (je nach Größe) und ist meist nur auf den Sekundärenergieträger Erdgas oder Biogas angewiesen. Die Leistung der einzelnen Komponenten wird so bemessen, dass nicht wesentlich Strom für die Anlage von extern bezogen werden muss. Die Anlage wird also im Großen und Ganzen mit Erdgas, welches auch aus biogenen Quellen kommen kann, betrieben. Diese Station soll in Containerbauweise, wahlweise mit optischem Anspruch, anschlussfertig geliefert werden.

Bei Bedarf werden die Wärmepumpen abgeschaltet, um den gesamten erzeugten Strom der BHKW-Anlagen in das Netz einzuspeisen. Umgekehrt kann bei Stromüberschuss im Netz der Betrieb nur mit den Wärmepumpen gestaltet werden. Die Anlage soll also konsequent auf Stabilisierung des Stromnetzes ausgelegt sein.

Mit dieser Aufteilung (mit sowohl im Tagesverlauf, wie zudem noch im Saisonal-und Witterungs-bedingten Wechsel) mittels von modifiziert aufeinander abgestimmten Hybrid-Energie-Erzeugungssystem-Einheiten (Wärmepumpe + Blockheizkraftwerk-Einzelblock - oder Hybrid-Einheiten) werden jeweils Energie-, Kosten- u. umwelteffiziente Betriebsweisen erwirkt (hohe Effizienz-Margen).

Gerade in der Vermeidung von Kohlendioxid-Emissionen und dem damit einhergehenden Emissionshandel wird das System hohe Einsparungen erzielen können.

### Transport der Wärme zum Nutzer:

Der zweite Meilenstein ist die Übertragung der Wärme. Diese wird nicht im Zweirohrsystem zu den Verbrauchern zugeleitet und wieder von diesen abgeleitet, sondern als sogenannte "Einrohranordnung" ausgeführt.

Aus Kostengründen und um den Aktionsradius der Fernwärme ganz wesentlich zu erhöhen, bei gleichzeitig wesentlich sinkenden Installationskosten sowie Wärmeverlusten, wird dieses Verfahren angewandt.

Mittels dieser Einrohranordnung (ohne Rücklauf), kann der thermische Energiebedarf für die angeschlossenen Verbraucher am "ökonomischsten" übertragen und so Netz-weit bereitgestellt werden.

Ferner kann bei verfügbaren Gefällstrecken in diesem Versorgungsbereich dort auf Grund der Gravitationskraft-Ausnutzung auf Pumpen- Förderleistung ganz oder zumindest größtenteils verzichtet werden. Damit können entsprechend elektrische Energiekosten dauerhaft eingespart werden.

Je nach Geländetopologie kann die zentrale Sammlung des Rücklaufwassers aus der Einrohranordnung sinnvoll sein, um die geodätische Höhe zu nutzen. Dies gilt dann wenn die Veredelungsstation tiefer steht als die Abnehmer.

Diese Sammelleitung kann ein völlig unisoliertes, vergleichsweise preiswertes Rohr sein. Damit würde in der Art ein sehr einfach ausgeführtes 2-Rohr-System erzeugt. Auch der Einsatz von Doppelrohren in einem Isolierungsmantel wäre denkbar.

Aufgrund der Tatsache, dass das System offen ausgebildet ist, sollten vorzugsweise korrosionsbeständige Bauteile eingesetzt werden.

Aktuell gibt es auf dem Markt derzeit Kunststoff-Fernwärmerohr bis zur Dimension DN 125, die noch von der Rolle verlegt werden. Diese Verlegeart, die im ländlichen Bereich überwiegend im Grünland, Ackerland, Grünstreifen, neben der Straße oder zwischen Straße und Radweg zu verlegen wäre, ist günstig und liegt pro Trassen-Meter in der Gesamtsumme bei höchstens 30 % von üblichen Fernwärmeverrohrungen.

In Zukunft werden auch größere Rohre in dieser Art angeboten, die Leistung ist also nicht begrenzt. Gleichwohl, könnte das System auch bestehende Fernwärmeversorgungen, die regional sind, also nicht verbunden, integrieren und zu großen, überregionalen Netzen zusammenführen.

In weiten Strecken im Verbindungs- und Außenbereich der Dörfer muss das System auch nicht gegraben werden, sondern kann mit einem Kabelpflug sehr schnell und günstig unter die Erde gebracht werden.

Aufgrund der Tatsache, dass der Abfluss der Einrohrfernwärme mit 10°C festgelegt ist, ergibt sich eine Spreizung von 58-70K. Diese liegt ganz erheblich über üblichen Fernwärmeleitungen. Aus dieser großen Spreizung ergibt sich gleichzeitig die maximale Leistung der Anlage mit einem Strang DN 125, die bei etwa 5.000 kW liegt. Für diese kleine Dimension DN 125 ist dies ein enorm hoher Wert.

Gleichzeitig liegt der Aktionsradius einer solchen Fernwärme ab Wärmequelle bis zu 30km und damit etwa um den Faktor drei höher als bei üblichen Fernwärmsystemen. Es ist zu erwarten, dass sich in Zukunft Rohrleitungen mit größerer Dimension in dieser Art darstellen lassen. Somit ist das System nicht zwingend in der Leistung begrenzt.

Das System kann auch speichernd wirken, da zum einen die Vorlauftemperatur für Stunden um 10K erhöht werden kann. Weiters findet sich in den Gebäuden eine ausreichende Speicherkapazität, die zusätzliche Leistung wiederum für Stunden aufnehmen kann. Diese Tatsache erhöht die Stromnetzstabilisierende Wirkung des Systems erheblich, da z. B. im Winter und in der Übergangszeit günstiger Solarstrom am Tag in Wärme gewandelt werden kann.

Abends bei Stromknappheit speisen die Wärmepumpen und die BHKW-Module Strom in das Netz zurück. Bei entsprechender Vertragsgestaltung ergeben sich hier für die Wärmenutzer des Systems erhebliche Energiekosten-Einsparungen.

### Umsetzung und Adaption der Wärme im Gebäude:

Das dritte Standbein des Gesamtsystems ist eine Fernwärmeübergabevorrichtung im Haus.

Ziel ist die Umsetzung der mit 68 -80 °C ankommenden Fernwärme in das Hausnetz. Die erfindungsgemäße Fernwärmeübergabevorrichtung kann als sogenannte Hybrid-Station ausgebildet sein, die zum überwiegenden Teil die Wärme direkt nutzt und daraus dann Trinkwarmwasser mit bis zu 65 oder 70 °C erzeugen und das Heiznetz mit bis zu 75 °C speisen kann.

Gleichzeitig wird aber der Rücklauf von einer sehr kleinen Wärmepumpe ausgekühlt, so dass primär zu jeder Zeit eine Rücklauftemperatur des Fernwärmemediums von 10 °C eingehalten wird. Das Primärwasser (Fernwärmemedium) mit 10 °C wird immer von mehreren Gebäuden, aber lokal, gesammelt und wieder in das Medium zurückgegeben, aus dem es ursprünglich entstammte.

Dementsprechend wird aus dem Grundwasser entnommenes Fernwärmemedium wieder ins Grundwasser zurückgeführt. Gleiches gilt beispielsweise für Flusswasser.

Der Anteil der Wärmepumpe, die in einem üblichen Haus nur ca. 2-3 kW Wärmeleistung aufweist und mit einem Kompressor mit ca. nur 500 W elektrischer Aufnahmeleistung auskommt, liegt je nach Gebäude (abhängig von den Temperaturen der Heizung) bei 5-10 % der Wärmearbeit. Infolge der hohen Verdampfer-seitigen Temperaturniveaus und des geringen Hubs liegen die Jahresarbeitszahlen hier bei Werten von 4,5 - 6. und könnten mit Photovoltaikstrom als Eigenversorgung günstig genutzt werden.

### Diese Vorgehensweise hat folgende Vorteile:

Die Fernwärme ist in jedem Gebäude anwendbar, die Rücklauftemperatur der Fernwärme (heute immer ein großes Problem, da meist zu hoch), spielt keine Rolle.

Trinkwarmwasser kann zu jeder Zeit hygienisch erwärmt werden, ohne besondere Kosten zu verursachen.

Das System umfasst 2 Speicher (Heiß und Kalt) mit je mindestens 300 Liter, damit ist zum einen eine sehr große Vergleichmäßigung schon im Gebäude aber natürlich auch im Gesamtsystem erreichbar. Die Speicher haben optional einen elektrisch betriebenen Notheizstab. Diese Notheizstäbe können zudem in das Gesamtkonzept des Stromnetzausgleichs eingebunden werden, in dem diese Zentral gesteuert Stromüberschüsse dem Netz entnehmen. Auf Wunsch kann das System weitere Heizkreis-Anschlüsse und die Einbinde-Möglichkeit für thermische Solaranlagen bereitstellen.

Wenn es die Räumlichkeiten zulassen, kann man auch mit einem Schichtspeicher mit verschiedenen Zonen auskommen.

Die Speicherung ist dabei nicht aus Wasser begrenzt, auch Latentwärmespeicher beliebiger Basis wären geeignet und in das System integrierbar.

Im Rahmen der Verrohrung werden Steuerkabel mit verlegt, damit lässt sich ein wirksames Wärmemanagement aufbauen, weiters eine Störüberwachung. Schließlich kann im Rahmen der Verlegung auch ein Breitband-Internet-Anschluss und weitere Kommunikation, die auch heute noch in vielen ländlichen Gebieten fehlt, mit verlegt werden.

Der anfällige und teure Wärmemengenzähler kann entfallen. Das System regelt konstant auf 10 °C Ablauftemperatur aus, damit würde ein handelsüblicher Wasserzähler im Ablauf zur Abrechnung reichen.

Gegebenenfalls kombiniert mit Temperaturmessungen kann mittels Regelung ein Energiezähler generiert u. damit nach Energiemengen geregelt werden.

### Steuerungs-, Regelungs- Archivierungs- u. Verrechnungssystem:

Über den Zentralen Zugriff auf die Regelung ist es möglich, alle Komponenten des Systems Signaltechnisch durchzustimmen.

Dieses basiert auf innovativen Ansätzen, um alle "Fernwärme-Hybrid-Systemkomponenten" insbesondere angepasst an die "Einrohr-Technologie" bedarfskonform, mit Lastwechsel, auch Störgrößen bezogen vollwertig steuern u. regeln zu können.

Steuer- und regelungstechnische Anforderungen sind an das erfindungsgemäße Fernwärme-Eirohrsystem anzupassen und zu optimieren.

Charakteristisch für das Hybrid-Energie-Erzeugungssystem ist dabei die jeweils zueinander abgestimmte Anpassbarkeit beziehungsweise Regelbarkeit der elektr. Energie-Erzeugung des/der BHKW-Einheit(en) auf den elektrischen Energiebedarf des aktuellen Lastbezugspunktes der Wärmepumpen-Einheit(en) mittels optimiertem thermischen Lastbedarfsmanagement-System.

Hierzu werden die dazu wesentlichen Prozessdaten erfasst, archiviert und mit systemspezifisch ermittelten und verfügbar gemachten Optimierungsbedingungen versehen.

Dann werden Steuerungs- und Regeleingriffe in automatisierter Weise optimal (in real time) ausgeführt, um damit die in Kaskadeneinheiten transformierte thermische Energie am Übergabepunkt mittels Übertragungsfluid (KWR) in das Einrohr-Fernwärme-Versorgungsnetz einzuspeisen.

Über das Rohrsystem wird das Fluid zum Wärmetauscher (WT) gebracht, gibt die thermische Energie dort ab, gleichzeitig messend, archivierend, steuernd und regelnd in den/die Pufferspeicher somit sollwert- und vorgabekonform einbringend. Über die nennenswerten Puffervolumen sind günstige Vergleichmäßigungswirkungen über den Tages-Energiebedarfs-Verlauf realisierbar.

Diese ermittelte verbraucherangepasste Energie-Bedarfsspitzen-Ermittlung erlaubt eine auf Bedarfsanforderungen sowie statistisch bekannten Verhaltensweisen begründete Berechnungs- und Entscheidungsvorlage, um damit sowohl Erzeugungssystemmaximalbelastungen, wie auch Rohrleitungsnetzverteilungspunktlasten in ausgleichender, effektiver Weise zu minimieren.

Damit kann die Energieentnahme wegen der hohen Spreizung sehr deutlich gegenüber einem Zwei- oder Doppelrohr-FW-Versorgungssystem erweitert werden. Beispielsweise ist eine Verdoppelung möglich.

Damit kann die Ableittemperatur unter ein geringeres Temperatur- und Energieniveau gesenkt werden, als dies unmittelbar vor der Hybridsystem-Erzeugerseite (Prozesswärme-Zufuhrseite) verfügbar gemacht werden könnte (siehe Detailbeschreibung zu Pos. d mit Skizze).

### Vorteile der Erfindung:

Der besondere Ansatz ist es, ein Hybrid-Hausanschluss-Stationskonzept bereitzustellen, auf dessen Basis es ermöglicht werden kann, eine Energieauskopplung (Spreizung) bei moderater Vorlauftemperatur zu erwirken.

Das heißt aus einem Liter Umlauf-Fluid kann vergleichsweise so viel thermische Wärmeenergie zur Nutzung beim Verbraucher entnommen werden, wofür beim üblichen Zweirohrsystem eine doppelt so große Menge, also zwei Liter, des Umlauffluids erforderlich werden und diese doppelt so hohe Gesamtmenge kontinuierlich energieaufwendig im Kreis gepumpt werden muss.

Beim Einrohrsystem fließt nur die etwa halb so große Fluidmenge über die halbe Rohrlänge (nur Vorlauflänge bis zum Verbraucher) mit halb so großer Rohrleitungsquerschnittsfläche und halb so großer Wärme-Rohrleitungsabstrahlmantelfläche und weniger als halb so großem Übertragungsenergieaufwand. Dies gilt deshalb, weil nur halb so viel Menge über die halb so große Rohrleitungsinnenwandfläche zu leiten ist, weniger als halb so großen Energieverlusten, weil keine bzw. geringe Pumpenergie erforderlich wird, die Abstrahlverluste aus obig genannten Gründen ca. halb so groß sind und zudem je nach Gelände (Wärmeentnahme höher als die Verbraucher) kostenfreie Gravitationsenergie genutzt werden kann, das System also ganz oder teilweise im Freifluss betreibbar ist. Die Wirkungsgrad-Optimierung wirkt auch emissionsreduzierend.

Mit einem solchen Fernwärmehybridsystem wird eine erhöhte Energie-, Kosten-, und Öko-Effizienz sowie Energie- und Ressourcenschonung erreicht. Das System kann daher durch geringe und stabile Wärmepreise als sozial gerecht und zukunftssicher bezeichnet werden. Durch die enorme Netzstabilisierung kann eine Energiewende nachhaltig unterstützt werden. Das System verbindet Nutzung von heute nicht nutzbarer Abwärme zum einen mit positiver Wechselwirkung zum Stromnetz zum anderen.

Durch geringe Wärme-Verluste, geringen Aufwand für den Wärmefluss (Pumpenenergie) und geringe Verlegekosten sind erheblich weitere Entfernungen der Wärme-Versorgung gegenüber dem heutigen Stand der Technik möglich.

### Systemspezifikation und weitere Vorteile:

Das Fernwärmesystem soll mit vortemperierter Abwärme aus beliebigen Quellen eine Fernwärmversorgung über große Strecken aufbauen. Es soll besonders gedacht sein, für dünn besiedelte Gebiete, die im Wesentlichen auch heute noch keinen Gasanschluss haben.

Diese Gebiete entziehen sich auch heute einer Fernwärmeerzeugung, da die Strecken zu weit und die abgenommenen Wärmemengen im Verhältnis zu Investition zu gering sind.

Beim vorgestellten System kann auch der Anteil der Abwärme-Gewinnung bei deutlich über 50 % liegen. Grundsätzlich kann die nutzbare Abwärme im Bereich 5 -30 °C gewonnen werden und stellt damit als Anwendung im weitesten Sinn heute nicht brauchbare Abwärme aus Produktionsprozessen und vor allen Dingen auch Kraftwerken dar.

Gleichzeitig wird das häufige Problem der Überwärmung von Flüssen entgegengewirkt. Das System kann in der Gesamtheit so wirken, dass bei einem Gaseinsatz von 100 % unter Zuhilfenahme der Abwärme und unter der Berücksichtigung der Verluste, an der Übergabe-Stelle der Kunden eine Nutzwärme von ca. 200 % ankommt.

Das System kann also zur Hälfte regenerativ sein. Das System kann konsequent stromnetzstabilisierend wirken, da es in Zeiten der Stromknappheit im überregionalen Netz Strom einspeist und in Zeiten von Stromüberschuss Strom entnimmt, also nutzbringend verwertet. Das System kann zu 50% Ressourcen-schonend wirken. Das System kann zu 50% Abgas-schonend wirken. Das System kann hohe Effizienz-Margen ausweisen.

### Ausnutzung und Gewinnung der Wärme, Veredelung:

Jegliche Abwärme, auch Flusswärme kann verwendet werden. Hierbei ist wichtig, dass die hier notwendigen wirtschaftlichen Einsatzgrenzen von Wärmepumpen eingehalten werden. Als Alternative oder Ergänzung könnten auch Gas-Motor betriebene Wärmepumpen, Absorptionswärmepumpen oder Hochtemperatur-Kompressionswärmepumpen eingesetzt werden.

Das Zusammenspiel mit Tiefengeothermie ist möglich.

Das System kann mit wenig Strom betrieben werden, im Wesentlichen mit dem Energieträger Gas als fossiler Träger, insbesondere mit Erdgas oder wahlweise in der regenerativen Variante Biogas.

Das System kann aber auch geeignet sein, Abwärme, die ohne jede Veredelung von Dritten zu beziehen wäre und mit 70-80°C anfällt, günstig über weite Strecken zu verteilen.

Je nach Wert und Bedarf an Strom im überregionalen Netz kann das System auch so geschaltet werden, dass wichtiger Spitzenstrom in das Netz geliefert werden kann. In diesem Fall wird die Leistung hauptsächlich über BHHW-Module erbracht, sollte diese nicht ausreichen, mit z.B. Spitzenlastkessel (Brennwert) ergänzt.

Hier bei soll das Gesamtnetz so gestaltet sein, dass überzentrale Steuerungsmöglichkeiten und die Puffermöglichkeit bei den Endkunden, in den Häusern, eine Puffermöglichkeit von mehreren Stunden, erreicht wird. Die Station soll komplett vormontiert als Modul in kurzer Zeit erstellt werden können.

### Transport der Wärme zum Nutzer:

Das Verteilsystem weist einerseits geringe Wärmeverluste auf (nur ca. 30 -40 % von heutigen Systemen), transportiert auch nur geringe Wassermengen (ca. 25 %, bezogen auf die Entfernung aus Vorlauf und Rücklauf) und schlägt bei der Investition gegenüber heutigen Systemen mit nur ca. 30 % zu Buche.

Ein weiterer Aspekt ist die schnelle Verlegung mit ca. mehreren Kilometern am Tag für die Hauptarbeiten im freien Gelände. Damit wäre gegenüber heutigen Systemen hier eine Beschleunigung der Verlegung um mindestens den Faktor 10 erreicht.

Auch im Endanschluss und in bebautem Gebiet kann die Verlege-Geschwindigkeit gegenüber heutigen Systemen mindestens verdoppelt werden.

Im Rahmen der Verlegung des Wärmerohrs können weitere Versorgungen in einem Zug zu den Kunden verlegt werden können, beispielsweise Breitbandinternet, Kabelfernsehen, Telefon, Strom oder dergleichen.

### Anpassung des Wärmeniveaus auf die Nutzeinheit:

Ziel ist es, die angebotene Wärme unabhängig in ein Gebäude beliebigen Zuschnitts zu adaptieren. Hierzu kann die Fernwärmeübergabevorrichtung in Modulbauweise ausgebildet sein. Die Fernwärmeübergabevorrichtung kann dabei jegliche Heiztemperaturen in einem Gebäude abdecken, wobei der Heizvorlauf maximal 75 °C betragen kann.

Die Ableitung der Fernwärme kann bei 10 °C +- 2 K liegen. Der aktuelle technische Stand bei hocheffizienten Pumpen und Regelungstechnik kann in der Station abgebildet sein. Damit würde jedes Haus, das angeschlossen wird, automatisch im Bereich Pumpen und Regelung auf den aktuellen Stand der Technik im Bereich Regelung und Pumpentechnologie gehoben.

Damit würden auch im Gebäude selbst erhebliche Einsparungen an Wärme und Strom erzielt. Ebenso erfolgt eine große Hausbrand-Emissions-Einsparung.

Schließlich sind heutige Gebäude mit über 80 % dem sogenannten Bestand zuzuordnen. Diese Gebäude weisen zumeist Heizungen auf, die im Winter wenigstens 65-70°C Vorlauftemperatur benötigen. Gleichzeitig zeigt sich in letzter Zeit, vor allen im Rahmen der aktuell novellierten Trinkwasserverordnung, dass Trinkwarmwassertemperaturen über 60°C aus hygienischen Überlegungen heraus wenigstens zeitweise anzuraten sind.

Auch dies kann die Fernwärmeübergabevorrichtung erfüllen. Dieses technische Einrichtung in Modulbauweise ausführbar, kann so ausgebildet sein, dass diese durch übliche Eingangstüren mit ca. minimal 80/190 cm passt, vor Ort in wenigen Stunden aus maximal 3 Einzelmodulen aufgebaut werden kann und innerhalb ca. eines Tages mit dem Gebäude verbunden werden kann. Auch die notwendige Regelung kann hierbei komplett integriert und voreingestellt sein und nur noch mit einem handelsüblichen 230 V Schuko-Stecker in Betrieb gesetzt werden. Die Arbeiten können im Wesentlichen ohne Elektroinstallationsfachleute durchgeführt werden.

### Figurenbeschreibung

Nachfolgend wird die Erfindung anhand einer Ausführungsbeispiele zeigenden Zeichnung näher erläutert. In der Zeichnung zeigen:

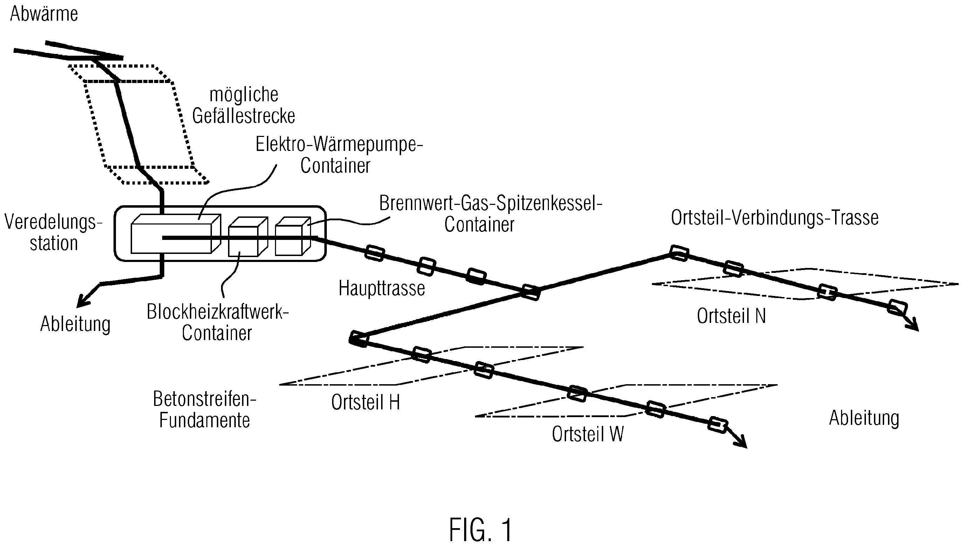

Fig. 1 eine Darstellung einer beispielhaften Ausführungsform eines erfindungsgemäßen Fernwärmesystems;
Fig. 2 eine Darstellung einer erfindungsgemäßen Entnahmevorrichtung für Abwärme;
Fig. 3 eine beispielhafte Darstellung für eine erfindungsgemäße Einrohranordnung;
Fig. 4 eine Schaltungsskizze eine erfindungsgemäßen Fernwärmeübergabevorrichtung;

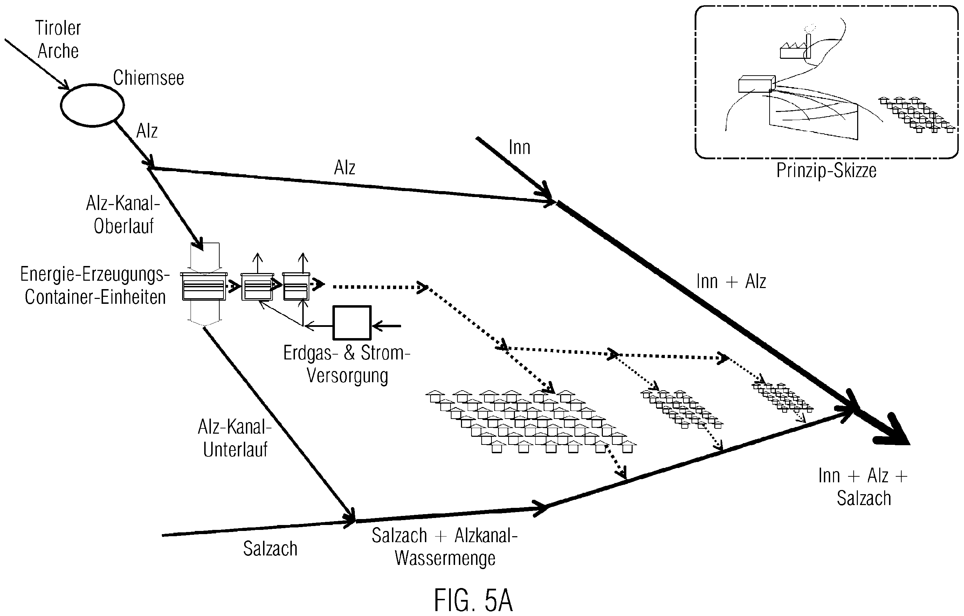

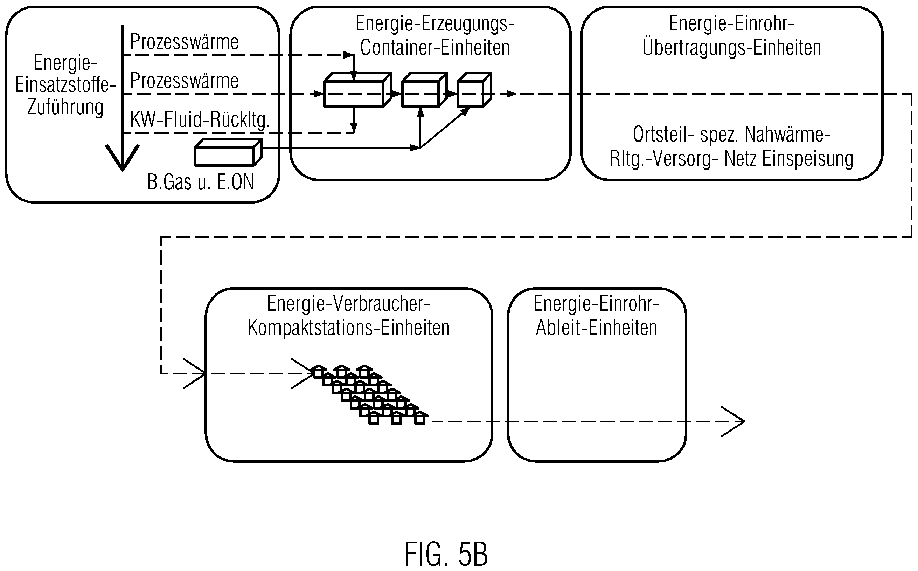

Fig. 5 eine Darstellung einer eines erfindungsgemäßen Fernwärmesystems gemäß eines weiteren Ausführungsbeispiels.

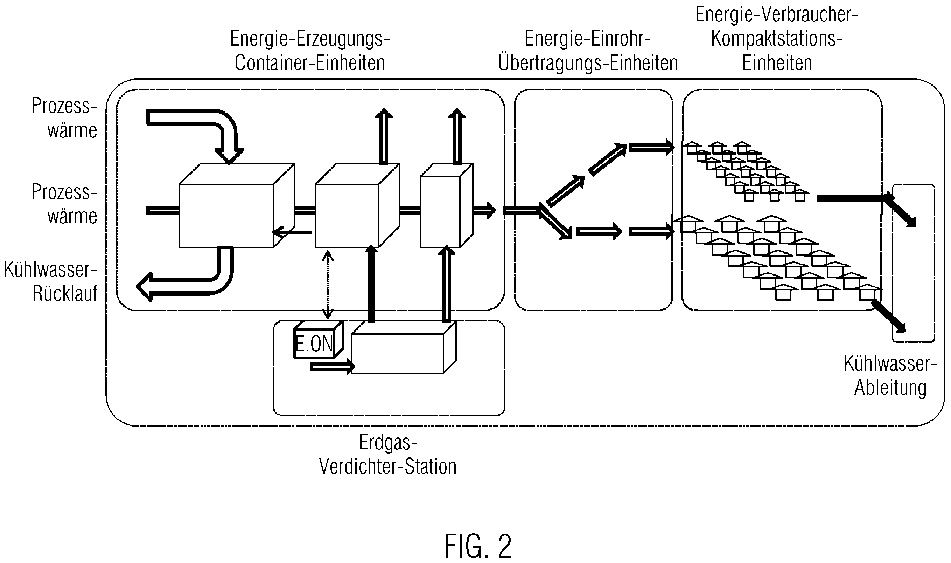

### Beschreibung zur Figur 2:

Der linke Teil der Figur zeigt eine Station, die als "Veredelungsstation" bezeichnet wird.

Ziel ist hier durch eine Kombination von handelsüblichen BHKW-Moduln mit Einbindung von Wasser-Wasser-Wärmepumpen ein weitestgehend vom Strombezug unabhängige Station zu etablieren.

Spitzenlastkessel übernehmen den höchsten Lastanteil, etwa ab 70 - 100 % der Maximalleistung.

Besonderes Augenmerk gilt der Stromnetzentlastung durch die Station. Zentrale und/oder dezentrale Lösungen sind möglich. Bei Stromknappheit können im Standardsystem (5.000 kW Wärme) ca. 800 kW Strom für Stunden ins Netz rückgespeist werden, bei Stromüberschuss können ca. 800 kW Strom für Stunden aus dem Netz entnommen und in Wärme umgesetzt werden. Der geschätzte Ansatz des Stromausgleichs beträgt also ca. +/- 2 kW je durchnittlichem Haushalt.

Um eine kostengünstige und schnelle Montage zu erreichen, sollen die Einheiten in einen oder je nach Größe der Anlage mehrere Container integriert, bereits im Werk gefertigt sein.

Vor Ort wird dann nur noch der Anschluss an folgende Medien vorgenommen:
- Abwärme-Quelle
- Abfluss der ausgekühlte Abwärme (ca. 67% der Abwärme-Quelle)
- Abfluss der Einrohrfernwärme (ca. 33% der Abwärme-Quelle)
- Gasanschluss
- Stromanschluss, im Wesentlichen zunächst nur als Zusatzversorgung und für die Netzsynchronisation der BHKW-Generatoren, im Besonderen aber zur Netzstabilisierung
- Beistellung von Zusatzmedien wie Steuerkabel oder Breitband-Internetkabel

Weiters kann die Station auf Streifen- und/oder Schraub- Fundamenten, für schnelle Montage stehen. In der Station ist das komplette Technikpaket, nebst den Aggregaten auch alle Wärmetauscher, die Pumpen und die Regelung integriert.

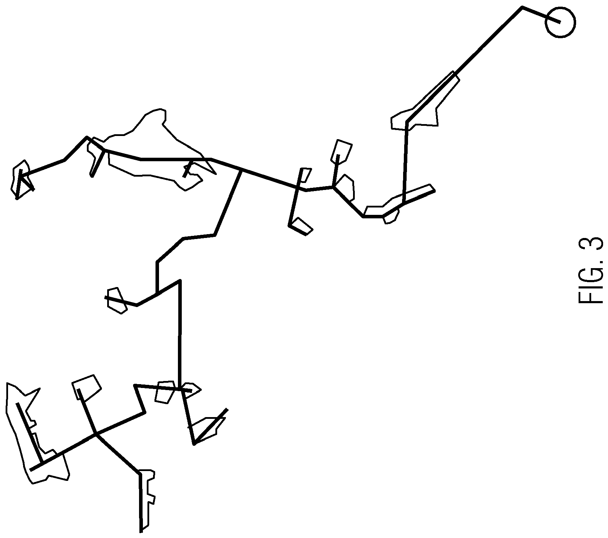

### Beschreibung zur Figur 3:

Die Einrohrfernwärme schafft Vorteile gegenüber üblichen Systemen.

Die Wärmeabstrahlverluste werden wegen halber Übertragungsmenge und halber Rohrleitungslänge (nur Vorlauf-Länge), halber Vorlauf Wärmeabstrahlfläche entsprechend vermindert.

Der elektrische Übertragungsenergiebedarf kann auf Grund der halben Übertragungsmenge, halber Rohrleitungslänge (nur Vorlauf-Länge), der halben Vorlauf-Rohrmantel-Reibfläche (Rohrinnenfläche) erheblich abgesenkt werden.

Mittels Gravitationsenergienutzung aus dem Gefällstreckenverlauf begründet und in Kombination von den Vorteilen aus Pos. b) kann die Energieübertragung auf ein erweitertes Fernwärmerohrleitungsnetz auch in nachfolgend ebene Gebiets-Bereiche unter dem statisch beaufschlagen Druck ganz oder zumindest nahezu Antriebsenergiefrei übertragen werden. Für eine komplett antriebsfreie Übertragung werden etwa 40-80m Höhendifferenz zwischen Beginn des Netzes und letztem Verbraucher benötigt.

Die Rohrquerschnitts-Reduzierung/Halbierung bewirkt eine Nennweitenreduktion, woraus demzufolge der Rohrleitungsisolationsmassenbedarf vermindert werden kann sowie die Verbindungs- und Formstücke kleinerer Nennweite wie auch die Armaturen günstiger werden bei Planung, Beschaffung und Montage.

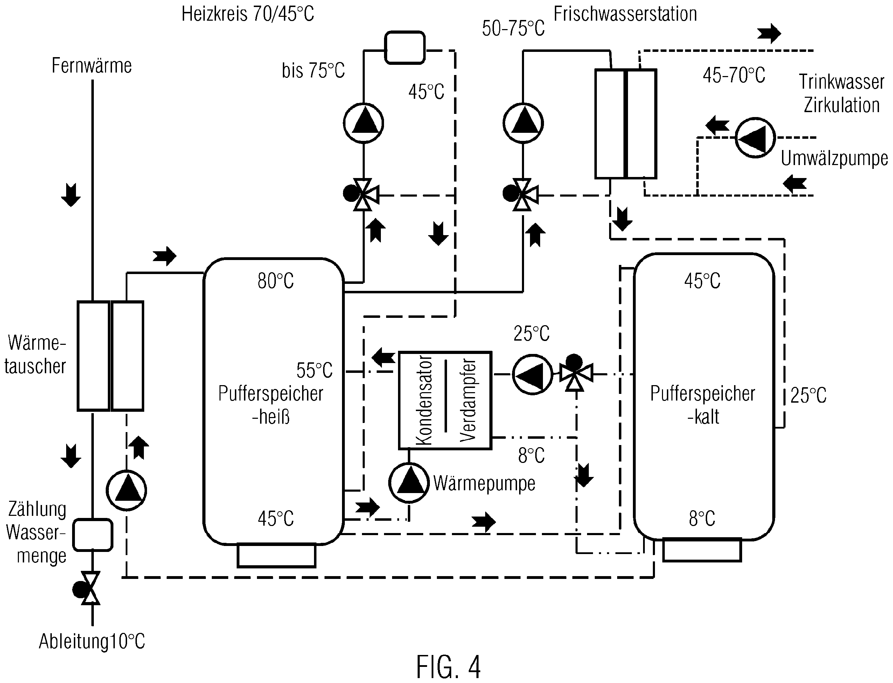

### Beschreibung der Figur 4:

Die Fernwärme-Hybrid-Station wird so konzipiert sein, dass in einem Armaturenkasten, Gehäuse, alle Funktionsbauteile enthalten sind. Maße der 10 kW-Station sind Breite ca. 60-70cm, Tiefe ca. 60cm, Höhe ca. 1,60 m.

Auch die gesamte Elektrik und die Regelung sind eingeschlossen. Die Verbindung mit dem Haus erfolgt über einen handelsüblichen Schukostecker 230 V oder als Festanschluss ab Verteilung mit 3*1,5 mm².

Die zwei 300 Liter Fluidbehälter (Puffer) (für das Gebäude 10 kW) werden zur Station beigestellt geliefert und flexibel an den Armaturenschrank angeschlossen. Damit kommt die Station in jeden Keller und durch jede Tür größer 80/180 cm.

Die Station ist für jedes Gebäude geeignet, die Vorlauftemperatur im Winter sollten aber unter 75 °C liegen, was in fast allen üblichen Gebäuden realisierbar ist.

Das Bauteil kann anschlussfertig bereitgestellt werden. Es können der Heizkreis Vorlauf, der Heizkreis Rücklauf, Warmwasser, Kaltwasser, wenn vorhanden, Zirkulation, Fernwärme-Zuleitung sowie die Fernwärme-Ableitung angeschlossen werden, wodurch das System betriebsbereit ist.

Der Fernwärmeübergabevorrichtung kommt eine besondere Bedeutung zu. Sie kann die Einrohr-Fernwärme auf 10 °C abkühlen. Wenn es sich um bestehende Gebäude handelt, so wird ein Heizkreisniveau von maximal 70/45 °C gefordert. Bei neuen Gebäuden kann minimal ein Niveau von 40/30 °C erreicht werden.

Die Station kann nun aus 2 Speichern, auch "Fluidbehälter" genannt, bestehen, je 300 Liter Schwarzstahl, Heiß- und Kaltspeicher.

Die Fernwärme wir in dem von der Hauptzentrale gesteuerten Wärmetauscher aus Edelstahl angebunden.

Bei großen Gebäuden sind auch mehrere Speicher möglich, wie auch bei ausreichenden räumlichen Verhältnissen, die Zusammenführung des Speichervolumens in einen einzigen Schichtenspeicher möglich ist.

Gezählt wird nicht die Wärme, sondern nur die Wassermenge des Durchlaufs, die ja wegen der großen Spreizung gering ist und auf Konstant 10°C ausgeregelt.

Das entwärmte Wasser wird wieder aufgenommen und gesammelt, aus mehreren Häusern wieder in einen Fluss oder in das Grundwasser zurückgeführt, je nachdem aus welcher Art von Quelle es entnommen wurde.

Die Station 10 kW besteht ferner aus einem Heizkreis, einer Frischwasserstation und einer kleinen Wärmepumpe, die das Niveau unterhalb der Rücklauftemperatur des niedrigsten temperierten Heizkreises wieder ca. auf eine Mittetemperatur aus Heizkreisvor- und -rücklauf hebt.

Als Rücklauf des Verdampfers der Wärmepumpe dürfen 8°C gelten. Je nach Temperaturniveau der Heizkreise liegt nun Direktnutzung oder Nutzung über Wärmepumpe vor. Der Anteil des Wärmepumpenstroms beträgt hierbei je nach Gebäudetyp (Heiztemperaturen) zwischen 5 und 10 % der Wärmemenge.

Die Station stellt außer den Anschlüssen keinerlei Anforderungen an das Gebäude. Zusätzlich kann ein 2. oder 3. oder 4. Heizkreis vorgesehen werden, besonders dann, wenn im Gebäude noch Niedertemperaturheizkreise verfügbar sind, beispielsweise ein eigener Kreis für Fußbodenheizung oder dergleichen. Dies kann die die Effizienz-Margen weiter erhöhen.

Die Station kann eine komplette Frischwasserstation umfassen, die je nach Gebäude und hygienischer Anforderung mit einer Zapftemperatur von 45-60°C betrieben werden kann. Eine thermische Desinfektion mit bis zu 70 °C ist möglich.

Die Station ist skalierbar und soll in den Leistungsgrößen 10 kW - 2*300 Liter, 20 kW - 2*500 Liter, 40 kW - 2*1000 Liter oder 4*500 Liter oder Sonderstationen bis 400 kW eingebaut werden.

### Kurzbeschreibung der Erfindung

Neuartiges, zur Nutzung von beliebiger Abwärme von 8 bis 30 °C geeignetes Heizsystem, für den klassischen Einsatz in Städten, besonders aber auch in dünn besiedelten Wohngebieten. Versorgungsmöglichkeit für beliebige Gebäude, vor allem Altbau mit einer höchsten Versorgungs-Temperatur von 75 °C. Neuer technischer Ansatz des Wärmetransports, der gleichermaßen auch für höhere und hohe direkte Abwärme-Temperaturen bis 95 °C geeignet ist. Neuer technischer Ansatz der Umsetzung und Adaption der transportierten Wärme auf bestehende Gebäude und Neubauten. Primärenergiefaktor des Gesamtsystems 0,2 bis 0,5. Energieausnutzung zwischen 150 - 250 %.

### Allgemeiner Systemansatz:

Zur Nutzung von beliebiger Abwärme von 8 bis 30°C geeignetes Heizsystem, für den klassischen Einsatz in Städten, besonders aber auch in dünn besiedelten Wohngebieten. Versorgungsmöglichkeit für beliebige Gebäude, vor allem Altbau mit einer höchsten Versorgungs-Temperatur von 75°C.

Technischer Ansatz des Wärmetransports, der gleichermaßen auch für höhere und hohe direkte Abwärme-Temperaturen bis 95°C geeignet ist. Neuer technischer Ansatz der Umsetzung und Adaption der transportierten Wärme auf bestehende Gebäude und Neubauten. Primärenergiefaktor des Gesamtsystems 0,2 bis 0,5.

Energieausnutzung zwischen 150 - 250%. Wärmegewinnung und Verteilung als stromnetzstabilisierender Puffer.

### Ausnutzung und Gewinnung der Wärme, Veredelung:

Beschrieben wird ein Verfahren, das aus Industrie- und Kraftwerksabwärme nur unter der Zuhilfenahme von Erdgas oder Biogas die Wärme und Trinkwarmwasserbereitung von ländlichen Gebieten übernehmen kann. Es ist gedacht als Ersatz für die noch häufigen Heizölversorgungen, auch ohne örtlichen Gasanschluss. Die Wärme des Systems wird zu über 50 % aus kostenloser Abwärme gespeist, der Rest wird über vergleichsweise preiswertes Erdgas beigestellt.

### Transport der Wärme zum Nutzer:

Der Erfindungs- und Patentfähige Status des nachfolgend beschriebenen Systems ist dadurch gekennzeichnet, dass thermische Energie, jedweden Mediums- und Aggregatzustandes (flüssig, Granulatförmig, gasförmig) in ein Übertragungs-Transportmittel hier Fluidmedium bezeichnet, auf definierte Weise in das bezeichnete Übertragungssystem ein gebracht, ein gekoppelt, transformiert wird, um es von einem oder mehreren in Verbindung stehender Einspeiseort (*e) an einen oder mehrere Energie-Nutzer / Verbraucherort (*e) zu bringen, um es von dort nicht mehr an einen oder mehrere Einspeise- Ort (*e) zurückleiten zu brauchen sondern von dort in Eignungs-konformer Weise nach erfolgter Teil-Energieentkopplung abzuleiten (nicht zurück zu leiten).

Die Ableitung kann mittels des genutzten Übertragungstransportmittels jedweden Mediums- Aggregatzustandes (flüssig, Granulatförmig, gasförmig) bspw. einem Versickerungssystem zugeführt oder/und in ein stehendes Gewässer oder/und Fließgewässer eingeleitet oder/und in das Erdreich (z. B. bei Geothermieanlagen dem Rücklaufstrang) verpresst werden.

### Anpassung des Wärmeniveaus auf die Nutzeinheit:

In den Gebäuden wird eine spezielle Wärmeübergabestation eingebaut, die unabhängig vom Alter und den Temperaturen des Heiznetzes eine Umsetzung und Auskühlung der gelieferten Wärme auf 10 °C bewirkt. Alle Gebäude des sogenannten "Bestandes" mit hohen Heiztemperaturen können versorgt werden. Gleichermaßen ist das System bei noch höherer Effizienz für den Neubau geeignet.

Das Trinkwasser wird zu jeder Zeit im Rahmen der hygienischen Anforderungen der neuen Trinkwasserverordnung erzeugt. Ein Legionellen-Risiko kann weitestgehend ausgeschlossen werden.

Ein Strombedarf für diese System besteht nur in den Gebäude selbst, dieser liegt dort bei 5 -10 % der Nutzwärme. Die zentralen Einrichtungen kommen ohne nennenswerte Stromversorgung aus.

Das Verteilsystem als auch die Hausstationen verfügen über nennenswerte Speichermöglichkeiten im Bereich von einigen Stunden.

Über die zentrale Veredelungsstation kann bei Stromknappheit Strom in das überregionale Netz rückgespeist werden, der dann netzstabilisierend wirkt. Im Falle des Stromüberschusses im Netz kann das System nur mit Strom betrieben werden, der mit etwa dem Faktor 4 in Wärme umgewandelt wird und diese Wärme den Nutzern zuführen. Bei normalen Bedingungen im Stromnetz ist das System so ausgeführt, dass die Strombilanz ausgeglichen ist, dass das System also ohne nennenswerten Stromzukauf oder Stromabgabe betrieben wird.

### Weitere vorteilhafte Ausgestaltungen der erfindungsgemäßen Lehre:

Gemäß weiteren vorteilhaften Ausgestaltungen erfüllt die erfindungsgemäße Fernwärmeübergabevorrichtung beziehungsweise das erfindungsgemäße Fernwärmesystem zur Versorgung von Gebäuden mit Wärmeenergie zumindest eine der folgenden Anforderungen oder erzielt zumindest eine der folgenden Vorteile.
- Das Fernwärmesystem umfasst gemäß einer vorteilhaften Ausgestaltung eine Entnahmestation für Abwärme, die als Veredelungsstation ausgebildet ist.
- Die Veredelungsstation verschafft die Möglichkeit, an zentraler Stelle mit effizienten Großaggregaten direkt nutzbare Wärme zu erzeugen (ein Fernwärmemedium mit Temperaturen von 65 - 83 °C, wobei es sich bei dem Fernwärmemedium beispielsweise um Wasser, mit oder ohne Zusätzen, handeln kann), die ohne weitere Anhebung jede heute an Heizungsanlagen gestellte Aufgabe erfüllen kann.
- Die Leitungsanordnung des Fernwärmesystems ist auf niedrige Wärme- und Strömungswiderstandsverluste, niedrige Umlaufmengen und niedrige Rohrdimensionen ausgelegt.
- Die voranstehend beschriebene Auslegung der Leitungsanordnung wird durch die hohe Temperaturspreizung zwischen Vor- und Rücklauf erreicht. Das Fernwärmemedium kann im Vorlauf beispielsweise eine Temperatur von unter 100 °C, insbesondere von 65 - 83 °C, jedenfalls aber eine Temperatur unterhalb der jeweiligen Verdampfungstemperatur des jeweiligen Fernwärmemedium bei jeweils vorherrschenden Druckverhältnissen, insbesondere bei Umgebungsdruck, aufweisen. Die Rücklauftemperatur des Fernwärmemediums kann unter 15°C, insbesondere unter 12°C, weiter bevorzugt weniger als 10°C betragen, insbesondere 9°C oder weniger als 9°C. Hierdurch ergeben sich bei kleinen Rohrdurchmessern geringe Umlaufmengen, geringe Pumpenleistungen, geringe Wärmeverluste der Rohre.
- Die Fernwärmeübergabestation kann eine Kombination aus zumindest zwei Speichervorrichtungen, die auch Pufferspeicher genannt werden, und Wärmetauschern sein, die zur Erhöhung der Temperaturspreizung über das vom Abnehmer, also dem jeweiligen Haus, angebotene Potenzial hinaus eingerichtet ist.
- Die Speichervorrichtungen können in vorteilhafter Weise fluidtechnisch miteinander verbunden sein. Dementsprechend kann Fluid, welches in einer der Speichervorrichtungen gespeichert ist, in die jeweils andere Speichervorrichtung befördert werden und umgekehrt. Die Speichervorrichtungen können also in vorteilhafter Weise zu einem einzigen, zusammenhängenden Fluidsystem verschaltet sein. Demnach können die mindestens zwei Speichervorrichtungen derart miteinander verbunden sein, dass Sie eine Gesamtspeichervorrichtung bilden, innerhalb derer die unterschiedlichen Temperaturniveaus auf besonders vorteilhafter Weise aufgebaut und aufrechterhalten werden können. Dies erlaubt auf vorteilhafte Weise eine hohe Temperaturspreizung zwischen Vor- und Rücklauf des Fernwärmemediums. Insbesondere erlaubt diese Anordnung, dass die Fernwärmeübergabestation des jeweiligen Fernwärmeabnehmers, also das Haus, die Vorgaben an die hohe Temperaturspreizung (beispielsweise 83 - 68 °C im Vorlauf und 9 - 12 °C im Rücklauf) erreicht.
- Die Fernwärmeübergagstation kann in vorteilhafter Weise mit einer Wärmepumpe ausgestattet sein, die zur Erhöhung des Temperaturgradienten zwischen den Fluidschichten innerhalb der Speichervorrichtung eingerichtet ist. Bei der Wärmepumpe kann es sich beispielsweise um eine sogenannte Klein-Wärmepumpe handeln. Es kann sich insbesondere um eine handelsübliche Wärmepumpe mit guter Effizienz handeln.
- Die Wärmepumpe kann dazu eingerichtet sein, eine Aggregatzustandsänderung des jeweiligen Heizmediums herbeizuführen. Die Wärmepumpe kann beispielsweise dazu eingerichtet sein, Kondensator-Temperaturen von 40-55 °C und Verdampfertemperaturen von 10-25 °C zu realisieren. In besonders vorteilhafter Weise kann die Wärmepumpe eine Kompressionsvorrichtung aufweisen, die zur Druck-, Volumen- und/oder Temperaturänderung des Heizfluids eingerichtet ist.
- Durch Anordnung der Entnahmestation für Abwärme, die vorzugsweise als Veredelungsstation ausgebildet sein kann, können hohe Vorlauftemperaturen insbesondere zwischen 55°C und 83°C, insbesondere bis zu 75°C, insbesondere höher als 63°C erreicht werden, sodass eine entsprechende Wärmerzeugung beim Fernwärmeabnehmer Vorort nicht mehr erforderlich ist. Aus diesem Grund wird ermöglicht, handelsübliche Wärmepumpen für die Fernwärmeübergabestation zu verwenden, welche derartige Temperaturen gar nicht oder nur mit schlechter Effizienz erreichen.
- Die Wärmepumpe der Fernwärmeübergabestation kann gemäß einer weiteren Ausgestaltung für den Betrieb frei von Wärmequellen eingerichtet sein. Insbesondere kann die Wärmepumpe dazu eingerichtet sein, eine Erhöhung der Temperaturspreizung im jeweiligen Abnehmerhaus zu erzielen. Die hierdurch erzielte niedrige Rücklauftemperatur des Heizfluids ermöglicht wiederum niedrig temperierte Umweltwärme aufzunehmen. Dementsprechend kann die Fernwärmeübergabestation gemäß der vorliegenden Erfindung auch ohne Einbindung in ein erfindungsgemäße Fernwärmesystem vorteilhaft betrieben werden.
- Die Fernwärmeübergabestation kann unabhängig von dem Fernwärmesystem beziehungsweise dessen Auslegung eingerichtet sein. Insbesondere kann die Rücklauftemperatur des Fernwärmemediums von der Einrichtung beziehungsweise der Auslegung der Fernwärmeübergabestation entkoppelt und kann nach finanziellen und energetischen Gesichtspunkten von Systembetreiber ausgelegt werden.
- In vorteilhafter Weise kann die Leitungsanordnung des Fernwärmesystems frei von einer Rücklaufleitung ausgebildet sein oder die Rücklaufleitung kann frei von Isolierungen sein. Insbesondere kann die Leitungsanordnung als offenes System ausgebildet sein, sodass das Rücklaufwasser Vorort abgeleitet werden kann und ein gesammelter Rücklauf nicht weiter erforderlich ist. Die Leitungsanordnung kann aber auch mit einer Rücklaufleitung ausgestattet sein.
- Die Einsparung von thermischen, strömungstechnischen, insbesondere antriebselektrischen Verlusten gegenüber konventionellen Fernwärmesystem erlaubt die Einbindung weiterer Systeme, ohne dass die Gesamteffizienz des Fernwärmesystems beeinträchtigt wäre.
- Die Entnahmestation für Abwärme, die vorzugsweise als Veredelungsstation ausgebildet sein kann, ermöglicht die Nutzung beziehungsweise die Entnahme jede Art von regenerativer Energie oder Abwärme im Temperaturbereich von 10 - z.B. 40 °C. Dies wird durch die niedrigen Rücklauftemperaturen und der damit verbundenen Temperaturspreizung gewährleistet. Bisher bekannte Fernwärmesystemen sind zur Verwertung von niedertemperierter Abwärme kaum geeignet.
- Die einzelnen Komponenten des Fernwärmesystems oder der Fernwärmeübergabevorrichtung des können mittels Fernüberwachung geregelt beziehungsweise gesteuert sein. Neben den hierfür vorzusehenden Steuer- und Regelsysteme können Archivierungssysteme, integrierte Abrechnungssysteme sowie Ferndiagnose-, Überwachungs- und Optimierungssystemen vorgesehen sein, die vorzugsweise über Licht-Wellen-Leiter oder mittels Sender/Empfänger-Datenübertragung verknüpft sein können.
- Das Fernwärmesystem kann gemäß einer alternativen Ausgestaltung als Fernkältesystem ausgestaltet sein.
- Die Entnahmestation für Abwärme, die vorzugsweise als Veredelungsstation ausgebildet sein kann, ist bevorzugt zur Entnahme von Prozesswärme von Industrieanlagen, wie beispielsweise Raffinerien oder Kraftwerken eingerichtet.
- Durch die Nutzung der erfindungsgemäßen Fernwärmeübergabevorrichtung beziehungsweise des erfindungsgemäßen Fernwärmesystems verbessert sich die CO2-Bilanz.
- Das erfindungsgemäße Fernwärmesystem kann bevorzugt Subsysteme aufweisen, die ausgebildet sein können als Fernwärmesystem-Geo, Fernwärmesystem-Regio, Fernwärmesystem-Pipe, Fernwärmesystem-City, Fernwärmesystem-Biogas.
- Das erfindungsgemäße Fernwärmesystem kann zur Regulierung von Flußwassertemperaturen eingerichtet sein, beispielsweise zur Entwärmung von Flüssen.
- Die Fernwärmeübergabevorrichtung kann integrativer Bestandteil des Fernwärmesystems sein und damit im Eigentum der jeweiligen Fernwärmesystembetreibergesellschaft verbleiben.
- Die Fernwärmeübergabevorrichtung kann in besonders vorteilhafter Weise dazu ausgebildet sein, in einem außerhalb des jeweiligen Hauses anzuordnenden Einrichtung, insbesondere einem Container, einem Gartenhaus oder einer Garage, untergebracht zu werden. Insbesondere kann die Fernwärmeübergabevorrichtung ober- oder unterirdische installiert werden.
- Die Fernwärmeübergabevorrichtung kann dazu eingerichtet sein, mittels einer Programmanwendung für mobile Endgeräte gesteuert, geregelt und/oder bedient zu werden, wobei die Programmanwendung besonders bevorzugt dazu eingerichtet ist auch Bedien- und Funktionsinformationen zur Fernwärmeübergabevorrichtung beziehungsweise zum jeweiligen Fernwärmesystem bereitzustellen.
- Die Entnahmestation für Abwärme, die vorzugsweise als Veredelungsstation ausgebildet sein kann, ist gemäß einer alternativen Ausführungsform dazu eingerichtet Wärme aus Flüssen, Kanälen, Seewasser oder Meerwasser zu entnehmen. Die Entnahme von Wärme aus derartigen Gewässern kann bevorzugt durch Wärmetauscher erfolgen. Bevorzugt kann es sich um einen sogenannten Floßwärmetauscher handeln, der weiter bevorzugt mittels eines Krans positionierbar sein kann. Insbesondere kann der Floßwärmetauscher im Bereich der Fluss- beziehungsweise Kanalmitte angeordnet werden, wodurch die höhere Strömungsgeschwindigkeit genutzt wird.
- Der Floßwärmetauscher kann ferner bevorzugt in Fließrichtung drehbar angeordnet werden, derart, dass in zeitlichen Abständen eine Selbstreinigung der Rohre des Floßwärmetauschers auf der Anströmseite vorgenommen werden kann. Die Rohre des Floßwärmetauschers können als Doppelrohr ausgebildet sein, insbesondere eine zusätzliche Innendurchströmung erlauben, wobei auf der An- und Abström-Seite bevorzugt eine Trichterform angebracht werden kann, so dass die Durchströmung mit erhöhter Geschwindigkeit erfolgen und gleichzeitig die Wärmetauscherfläche aufgrund der Innenrohr- und Außenrohr-Mantelfläche optimiert werden kann. Die Rohre können in vorteilhafter Weise zyklisch mit Pressluft oder mittels einer Abflußreinigungsdüse gereinigt werden. Anstelle eines Floßwärmetauschers, könnte auch ein kostengünstiges Boot zu einem Wärmetauscher-Boot ausgebildet werden.
- Die Entnahmestation für Abwärme kann ferner flexible Kunststoffrohre, die bevorzugt einen wärmeleitfähigen Gewebemantel aufweisen, umfassen, welche zumindest teilweise in einem Gewässer angeordnet sind. Beispielsweise können derartige Kunststoffrohre nach art eines langen Schlauchsystems in einem Gewässer eingebracht sein. Bevorzugt kann eine Schlauchschleife über Spannseile mittig oder im Wesentlichen mittig im jeweiligen Kanal oder Fluss fixiert werden. Hierdurch könnte mit nur geringem Aufwand ein Langrohr-Wärmetauschersystem ausgebildet werden, welches mit geringen Strömungsverlusten, was Folge der wenigen Bögen- und Umlenkverluste ist, betreibbar ist.
- Das Fernwärmesystem, insbesondere zur Versorgung von Gebäuden mit Wärmeenergie, weist gemäß einer alternativen bevorzugten Ausführungsform wenigstens eine Entnahmestation für Abwärme, insbesondere für Industrie- oder Kraftwerksabwärme, wenigstens eine Fernwärmeübergabevorrichtung in einem zu versorgenden Gebäude sowie mit eine Leitungsanordnung, die die Entnahmestation mit der Fernwärmeübergabevorrichtung verbindet und durch die ein Fernwärmemedium leitbar ist, auf. Dabei weist die Leitungsanordnung eine Zulaufleitung für einen Fernwärmedienvorlauf und eine Rücklaufleitung für einen Fernwärmedienrücklauf auf, wobei die Fernwärmeübergabevorrichtung bevorzugt dazu ausgebildet ist, eine Temperaturspreizung zwischen Fernwärmedienvorlauf und Fernwärmedienrücklauf zu erzeugen, die wenigstens 30°C oder mehr beträgt, bevorzugt 35°C oder mehr, weiter bevorzugt wenigstens 40°C oder mehr, insbesondere wenigstens 45°C, besonders bevorzugt wenigstens 50°C oder 55°C, insbesondere 60°C oder mehr.

## Patentansprüche

1. Fernwärmeübergabevorrichtung für ein Gebäude, insbesondere für ein Wohnhaus,
- mit wenigstens einem Heizkreislauf für ein Heizfluid,
- mit einem Wärmetauscher zur Übertragung von Wärmeenergie aus einer Fernwärmeleitung auf das Heizfluid in dem Heizkreislauf,
- mit einer Speichervorrichtung, die mit dem Heizkreislauf in Fluidverbindung steht und in der das Heizfluid schichtweise auf unterschiedlichen Temperaturniveaus speicherbar ist, und
- mit einer Wärmepumpe,
**dadurch gekennzeichnet,**
- **dass** die Speichervorrichtung einen ersten und einen zweiten Fluidbehälter aufweist und der erste Fluidbehälter Heizfluid in einem Temperaturniveaubereich speichert, der sich von dem Temperaturniveaubereich des Heizfluids im zweiten Fluidbehälter unterscheidet,
- **dass** die Wärmepumpe zur Erhöhung des Temperaturgradienten zwischen den Heizfluidschichten innerhalb der Speichervorrichtung eingerichtet ist und
- **dass** die Wärmepumpe dazu eingerichtet ist, das Heizfluid aus dem ersten Fluidbehälter der Speichervorrichtung von einem ersten Temperaturniveau auf ein zweites Temperaturniveau zu erhöhen und in den ersten Fluidbehälter zurückzuführen und gleichzeitig das Heizfluid aus dem zweiten Fluidbehälter der Speichervorrichtung von einem dritten Temperaturniveau auf ein viertes Temperaturniveau zu senken und in den zweiten Fluidbehälter zurückzuführen, wobei das dritte Temperaturniveau eine geringere Temperatur aufweist als das erste Temperaturniveau.

2. Fernwärmeübergabevorrichtung nach Anspruch 1, **dadurch gekennzeichnet, dass** die Fernwärmeübergabevorrichtung dazu eingerichtet ist, dass die Temperatur des ersten Temperaturniveaus zwischen 35°C und 55°C, vorzugsweise 45°C beträgt, dass die Temperatur des zweiten Temperaturniveau zwischen 45°C und 65°C, vorzugsweise 55°C beträgt, dass die Temperatur des dritten Temperaturniveau zwischen 25°C und 45°C beträgt und dass die Temperatur des vierten Temperaturniveaus zwischen 3°C und 10°C, vorzugsweise 8°C beträgt.

3. Fernwärmeübergabevorrichtung nach zumindest einem der Ansprüche 1 bis 2, **dadurch gekennzeichnet, dass** die Fernwärmeübergabevorrichtung dazu eingerichtet ist, dass das geringste Temperaturniveau im ersten Fluidbehälter im Wesentlichen dem höchsten Temperaturniveau im zweiten Fluidbehälter entspricht.

4. Fernwärmeübergabevorrichtung nach zumindest einem der Ansprüche 1 bis 3, **dadurch gekennzeichnet, dass** der Heizkreislauf zumindest einen Heizkreis für eine Gebäudeheizung und/oder einen Heizkreis für Warmwasseraufbereitung aufweist, wobei vorzugsweise der Heizkreis für Warmwasseraufbereitung einen Wärmetauscher zur Übertragung von Wärmeenergie aus dem Heizkreislauf auf Frischwasser in einer Frischwasserleitung aufweist.

5. Fernwärmeübergabevorrichtung nach Anspruch 4, **dadurch gekennzeichnet, dass** die Fernwärmeübergabevorrichtung dazu eingerichtet ist, dass der Heizkreis für die Gebäudeheizung eine Vorlauftemperatur von 65°C bis 90°C, vorzugsweise 75°C bis 80°C, und einen Rücklauftemperatur von 35°C bis 55°C, vorzugsweise 40°C bis 50°C, aufweist und/oder dass der Heizkreise für die Warmwasseraufbereitung eine Vorlauftemperatur von 65°C bis 90°C, vorzugsweise 75°C bis 80°C, und einen Rücklauftemperatur von 15°C bis 35°C, vorzugsweise 20°C bis 30°C, aufweist.

6. Fernwärmeübergabevorrichtung nach Anspruch 1, **dadurch gekennzeichnet, dass** der Wärmetauscher zwischen der Fernwärmeleitung und dem Heizkreislauf dazu eingerichtet ist, die Temperatur des Fernwärmemediums auf weniger als 15°C, insbesondere auf weniger als 12°C, insbesondere auf weniger als 10°C zu senken.

7. Fernwärmesystem, insbesondere zur Versorgung von Gebäuden mit Wärmeenergie,
- mit wenigstens einer Entnahmestation für Abwärme, insbesondere für Industrie- oder Kraftwerksabwärme,
- mit wenigstens einer nach einem der Ansprüche 1 bis 6 ausgebildeten Fernwärmeübergabevorrichtung in einem zu versorgenden Gebäude und
- mit einer Leitungsanordnung, die die Entnahmestation mit der Fernwärmeübergabevorrichtung verbindet und durch die ein Fernwärmemedium leitbar ist,
- wobei die Leitungsanordnung als offenes System ausgebildet ist.

8. Fernwärmesystem, insbesondere zur Versorgung von Gebäuden mit Wärmeenergie,
- mit wenigstens einer Entnahmestation für Abwärme, insbesondere für Industrie- oder Kraftwerksabwärme,
- mit wenigstens einer nach einem der Ansprüche 1 bis 6 ausgebildeten Fernwärmeübergabevorrichtung in einem zu versorgenden Gebäude und
- mit einer Leitungsanordnung, die die Entnahmestation mit der Fernwärmeübergabevorrichtung verbindet und durch die ein Fernwärmemedium leitbar ist,
- wobei die Leitungsanordnung eine Zulaufleitung für einen Fernwärmedienvorlauf und eine Rücklaufleitung für einen Fernwärmedienrücklauf aufweist und
- wobei die Fernwärmeübergabevorrichtung dazu ausgebildet ist, eine Temperaturspreizung zwischen Fernwärmedienvorlauf und Fernwärmedienrücklauf zu erzeugen, die wenigstens 30°C beträgt.

9. Fernwärmesystem nach einem der Ansprüche 8 bis 9, **dadurch gekennzeichnet, dass** die Fernwärmeübergabevorrichtung dazu eingerichtet ist, die Temperatur des Fernwärmemediums auf weniger als 15°C, insbesondere auf weniger als 12°C, insbesondere auf weniger als 10°C zu senken.

10. Fernwärmesystem nach zumindest einem der Ansprüche 8 bis 10, **dadurch gekennzeichnet, dass** die Leitungsanordnung das Fernwärmemedium ausgehend von der Fernwärmeübergabevorrichtung an einer von der Entnahmestation entfernten Stelle in die Umgebung, insbesondere in ein Fluss oder in das Grundwasser, leitet.

11. Fernwärmesystem nach zumindest einem der Ansprüche 8 bis 11, **dadurch gekennzeichnet, dass** die Entnahmestation für Abwärme als Veredelungsstation ausgebildet ist, welche eine Wärmepumpe, ein Blockheizkraftwerk und/oder einen Spitzenlastkessel aufweist, wobei die Veredelungsstation dazu eingerichtet ist, einen Teil der entnommenen Abwärme zur Temperaturerhöhung des restlichen Teils der entnommenen Abwärme zu nutzen.

## Claims

1. A district heat transfer apparatus for a building, in particular for a residential building,
- having at least one heating circuit for a heating fluid;
- having a heat exchanger for the transmission of thermal energy from a district heating pipeline to the heating fluid in the heating circuit;
- having a storage apparatus which is in fluid communication with the heating circuit and in which the heating fluid can be stored layer-wise at different temperature levels; and
- having a heat pump,
**characterized in that**
- the storage apparatus has a first fluid container and a second fluid container and the first fluid container stores heating fluid in a temperature level range which differs from the temperature level range of the heating fluid in the second fluid container;
- **in that** the heat pump is configured to increase the temperature gradient between the heating fluid layers within the storage device; and
- **in that** the heat pump is configured to raise the heating fluid from the first fluid container of the storage apparatus from a first temperature level to a second temperature level and to lead it back into the first fluid container and simultaneously to lower the heating fluid from the second fluid container of the storage apparatus from a third temperature level to a fourth temperature level and to lead it back into the second fluid container, with the third temperature level having a lower temperature than the first temperature level.

2. A district heat transfer apparatus in accordance with claim 1, **characterized in that** the district heat transfer apparatus is configured such that the temperature of the first temperature level amounts to between 35°C and 55°C, preferably to 45°C; such that the temperature of the second temperature level amounts to between 45°C and 65°C, preferably to 55°C; such that the temperature of the third temperature level amounts to between 25°C and 45°C; and such that the temperature of the fourth temperature level amounts to between 3°C and 10°C, preferably to 8°C.

3. A district heat transfer apparatus in accordance with at least one of the claims 1 or 2, **characterized in that** the district heat transfer apparatus is configured such that the lowest temperature level in the first fluid container substantially corresponds to the highest temperature level in the second fluid container.

4. A district heat transfer apparatus in accordance with at least one of the claims 1 to 3, **characterized in that** the heating circuit has at least one heat circuit for a building heating system and/or a heat circuit for preparing hot water, with the heat circuit for preparing hot water preferably having a heat exchanger for the transmission of thermal energy from the heating circuit to fresh water in a fresh water pipe.

5. A district heat transfer apparatus in accordance with claim 4, **characterized in that** the district heat transfer apparatus is configured such that the heat circuit for the building heating system has an infeed flow temperature of 65°C to 90°C, preferably 75°C to 80°C, and a return flow temperature of 35°C to 55°C, preferably 40°C to 50°C; and/or **in that** the heat circuit for preparing hot water has an infeed flow temperature of 65°C to 90°C, preferably 75°C to 80°C, and a return flow temperature of 15°C to 35°C, preferably 20°C to 30°C.

6. A district heat transfer apparatus in accordance with claim 1, **characterized in that** the heat exchanger between the district heating pipeline and the heating circuit is configured to lower the temperature of the district heating medium to less than 15°C, in particular to less than 12°C, in particular to less than 10°C.

7. A district heating system, in particular for the supply of buildings with thermal energy,
- having at least one removal station for waste heat, in particular for industrial waste heat or waste heat from power plants;
- having at least one district heat transfer apparatus in a building to be supplied, the district heat transfer apparatus being configured in accordance with any one of the claims 1 to 6; and
- having a pipeline arrangement which connects the removal station to the district heat transfer apparatus and through which a district heating medium can be conducted,
- wherein the pipeline arrangement is configured as an open system.

8. A district heating system, in particular for the supply of buildings with thermal energy,
- having at least one removal station for waste heat, in particular for industrial waste heat or waste heat from power plants;
- having at least one district heat transfer apparatus in a building to be supplied, the district heat transfer apparatus being configured in accordance with any one of the claims 1 to 6; and
- having a pipeline arrangement which connects the removal station to the district heat transfer apparatus and through which a district heating medium can be conducted,
- wherein the pipeline arrangement has an inflow line for a district heating media infeed flow and has a return flow line for a district heating media return flow; and
- wherein the district heat transfer apparatus is configured to generate a temperature spread between the district heating media infeed flow and the district heating media return flow which amounts to at least 30°C.

9. A district heating system in accordance with one of the claims 8 to 9, **characterized in that** the district heat transfer apparatus is configured to lower the temperature of the district heating medium to less than 15°C, in particular to less than 12°C, in particular to less than 10°C.

10. A district heating system in accordance with at least one of the claims 8 to 10, **characterized in that** the pipeline arrangement conducts the district heating medium, starting from the district heat transfer apparatus at a position remote from the removal station, into the environment, in particular into a river or into the groundwater.

11. A district heating system in accordance with at least one of the claims 8 to 11, **characterized in that** the removal station for waste heat is configured as a processing station which has a heat pump, a combined heat and power plant and/or a peak load boiler, with the processing station being configured to use a proportion of the removed waste heat to increase the temperature of the remaining proportion of the removed waste heat.

## Revendications

1. Dispositif de restitution de chauffage à distance pour un bâtiment, en particulier pour une maison d'habitation, comportant
- au moins un circuit de chauffage pour un fluide chauffant,
- un échangeur de chaleur pour transférer l'énergie thermique depuis une canalisation de chauffage à distance au fluide chauffant dans le circuit de chauffage,
- un dispositif de stockage qui est en liaison fluidique avec le circuit de chauffage et dans lequel le fluide chauffant peut être stocké par couches à différents niveaux de température,
et
- une pompe à chaleur,
**caractérisé en ce que**
- le dispositif de stockage comprend un premier et un second réservoir à fluide et le premier réservoir à fluide stocke le fluide chauffant dans une plage de niveau de température qui se distingue de la plage de niveau de température du fluide chauffant dans le second réservoir à fluide,
- la pompe à chaleur est conçue pour augmenter le gradient de température entre les couches de fluide chauffant à l'intérieur du dispositif de stockage, et
- la pompe à chaleur est conçue pour augmenter le fluide chauffant du premier réservoir à fluide du dispositif de stockage pour le faire passer d'une premier niveau de température à un second niveau de température et pour le ramener dans le premier réservoir à fluide, et pour baisser simultanément le fluide chauffant du second réservoir à fluide du dispositif de stockage pour le faire passer d'un troisième niveau de température à un quatrième niveau de température et pour le ramener dans le second réservoir à fluide, le troisième niveau de température présentant une température inférieure à celle du premier niveau de température.

2. Dispositif de restitution de chauffage à distance selon la revendication 1, **caractérisé en ce que** le dispositif de restitution de chauffage à distance est conçu de telle sorte que la température du premier niveau de température est comprise entre 35 °C et 55 °C, de préférence de 45°C, que la température du second niveau de température est comprise entre 45 °C et 65 °C, de préférence de 55 °C, que la température du troisième niveau de température est comprise entre 25 °C et 45 °C, et que la température du quatrième niveau de température est comprise entre 3 °C et 10 °C, de préférence de 8 °C.

3. Dispositif de restitution de chauffage à distance selon l'une au moins des revendications 1 à 2, **caractérisé en ce que** le dispositif de restitution de chauffage à distance est conçu de telle sorte que le niveau de température le plus faible dans le premier réservoir à fluide correspond sensiblement au niveau de température le plus élevé dans le second réservoir à fluide.

4. Dispositif de restitution de chauffage à distance selon l'une au moins des revendications 1 à 3, **caractérisé en ce que** le circuit de chauffage comprend au moins une boucle de chauffage pour un chauffage de bâtiment et/ou une boucle de chauffage pour une production d'eau chaude, et de préférence la boucle de chauffage pour la production d'eau chaude comprend un échangeur de chaleur pour transférer l'énergie thermique du circuit de chauffage à l'eau fraiche dans une conduite à eau fraiche.

5. Dispositif de restitution de chauffage à distance selon la revendication 4, **caractérisé en ce que** le dispositif de restitution de chauffage à distance est conçu de telle sorte que la boucle de chauffage pour le chauffage du bâtiment présente une température d'amenée de 65 °C à 90 °C, de préférence de 75 °C à 80 °C, et une température de retour de 35 °C à 55 °C, de préférence de 40 °C à 50 °C, et/ou **en ce que** la boucle de chauffage pour la production d'eau chaude présente une température d'amenée de 65 °C à 90 °C, de préférence de 75 °C à 80 °C, et une température de retour de 15 °C à 35 °C, de préférence de 20 °C à 30 °C.

6. Dispositif de restitution de chauffage à distance selon la revendication 1, **caractérisé en ce que** l'échangeur de chaleur entre la canalisation de chauffage à distance et le circuit de chauffage est conçu pour baisser la température du fluide de chauffage à distance à moins de 15 °C, en particulier à moins de 12 °C, en particulier à moins de 10 °C.

7. Système de chauffage à distance, destiné en particulier à alimenter des bâtiments en énergie thermique, comportant
- au moins une station de prélèvement pour la chaleur résiduelle, en particulier la chaleur résiduelle d'industrie ou de centrale électrique,
- au moins un dispositif de restitution de chauffage à distance réalisé selon l'une des revendications 1 à 6, dans un bâtiment à alimenter, et
- un agencement de canalisation qui relie la station de prélèvement au dispositif de restitution de chauffage à distance et qui permet d'acheminer un fluide de chauffage à distance,
- l'agencement de canalisation étant réalisé sous forme de système ouvert.

8. Système de chauffage à distance, destiné en particulier à alimenter des bâtiments en énergie thermique, comportant
- au moins une station de prélèvement pour la chaleur résiduelle, en particulier la chaleur résiduelle d'industrie ou de centrale électrique,
- au moins un dispositif de restitution de chauffage à distance réalisé selon l'une des revendications 1 à 6, dans un bâtiment à alimenter, et
- un agencement de canalisation qui relie la station de prélèvement au dispositif de restitution de chauffage à distance et qui permet d'acheminer un fluide de chauffage à distance,
- l'agencement de canalisation comprenant une conduite d'amenée pour une amenée de fluide de chauffage à distance et une conduite de retour pour un retour de fluide de chauffage à distance, et
- le dispositif de restitution de chauffage à distance est réalisé pour générer un écart de température entre l'amenée du fluide de chauffage à distance et le retour du fluide de chauffage à distance, qui est d'au moins 30 °C.

9. Système de chauffage à distance selon l'une des revendications 8 à 9, **caractérisé en ce que** le dispositif de restitution de chauffage à distance est réalisé pour baisser la température du fluide de chauffage à distance à moins de 15 °C, en particulier à moins de 12 °C, en particulier à moins de 10 °C.

10. Système de chauffage à distance selon l'une des revendications 8 à 10, **caractérisé en ce que** l'agencement de canalisation achemine le fluide de chauffage à distance depuis le dispositif de restitution de chauffage à distance vers un emplacement éloigné de la station de prélèvement, situé dans l'environnement, en particulier jusque dans un fleuve ou dans la nappe phréatique.

11. Système de chauffage à distance selon l'une des revendications 8 à 11, **caractérisé en ce que** la station, de prélèvement pour la chaleur résiduelle est réalisée sous forme de station d'affinage qui comprend une pompe à chaleur, une centrale de cogénération et/ou une chaudière de charge de pointe, la station d'affinage étant conçue pour utiliser une partie de la chaleur résiduelle prélevée pour l'augmentation de la température de la partie restante de la chaleur résiduelle prélevée.
